Europäisches Patentamt

European Patent Office

Office européen des brevets

(11) Veröffentlichungsnummer: **0 386 238**
**A1**

## EUROPÄISCHE PATENTANMELDUNG
### veröffentlicht nach Art. 158 Abs. 3 EPÜ

(21) Anmeldenummer: 88909010.6

(22) Anmeldetag: 25.07.88

(86) Internationale Anmeldenummer:
**PCT/SU88/00142**

(87) Internationale Veröffentlichungsnummer:
**WO 90/00932 (08.02.90 90/04)**

(51) Int. Cl.5: **B01J  19/18**

(43) Veröffentlichungstag der Anmeldung:
**12.09.90 Patentblatt  90/37**

(84) Benannte Vertragsstaaten:
**CH DE FR GB IT LI SE**

(71) Anmelder: **SPETSIALNOE KONSTRUKTORSKOE BJURO BIOLOGICHESKOGO PRIBOROSTROENIA AKADEMII NAUK SSSR**
**Moskovskaya obl.**
**puschino, 142292(SU)**

(72) Erfinder: **BARU, Mikhail Borisovich**
**mikroraion AB, 23-10 Moskovskaya obl.**
**Puschino, 142292(SU)**
Erfinder: **RODIONOV, Igor Leonidovich**
**mikroraion D, 1-161 Moskovskaya obl.**
**Puschino, 142292(SU)**
Erfinder: **SHESTAKOVSKY, Leonid Yakovlevich**
**mikroraion G, 9-46 Moskovskaya obl.**
**Puschino, 142292(SU)**
Erfinder: **LARIN, Vyacheslav Tarasovich**
**mikroraion AB, 24-20 Moskovskaya obl.**
**Puschino, 142292(SU)**
Erfinder: **DERYABIN, Sergei Mikhailovich**
**mikroraion G, 18-11 Moskovskaya obl.**
**Puschino, 142292(SU)**

(74) Vertreter: **Finck, Dieter et al**
**Patentanwälte v. Füner, Ebbinghaus, Finck**
**Mariahilfplatz 2 & 3**
**D-8000 München 90(DE)**

(54) **REAKTOR FÜR DIE FESTPHASENHERSTELLUNG VON BIOPOLYMEREN.**

(57) A reactor for solid-phase synthesis of biopolymers comprises a chamber (1) capable of being fully filled with a non-rigid polymer carrier (2) and provided with a filter (12) mounted inside the chamber (1) in the proximity of the zone where the solvents and reagents are fed into the chamber (1), and with a filter (11) located in the chamber (1) in the proximity of the zone where the solvents and reagents are

discharged from the chamber (1).

FIG.1

# REAKTOR ZUR FESTPHASENSYNTHESE VON BIOPOLYMEREN

## Technisches Gebiet

Die vorliegende Erfindung bezieht sich auf Reaktoren, insbesondere betrifft sie Reaktoren zur Festphasensynthese von Biopolymeren.

## Zugrundeliegender Stand der Technik

Es ist ein Reaktor zur Festphasensynthese von Biopolymeren bekannt, der eine Kammer mit einem unharten Polymerträger, welche einen Rohrstutzen zum Einbringen von Lösungsmitteln und Reagenzien in die Kammer und einen Rohrstutzen zum Ausbringen von Lösungsmitteln und Reagenzien aus der Kammerbesitzt, ein Filter, das in der Kammer in unmittelbarer Nähe der Zone zum Ausbringen von Lösungsmitteln und Reagenzien aus der Kammer angeordnet ist, und einen Mischer, der in der Kammer untergebracht ist, enthält (Beckman, USA, System 990, B-387C).

Bei dem genannten Reaktor zur Festphasensynthese von Biopolymeren hat die Kammer ein großes Reaktionsvolumen im Vergleich mit dem Volumen des unharten Polymerträgers, was zu einer Verminderung der Leistung und der Qualität der zu gewinnenden Biopolymere, zum Mehrverbrauch an Lösungsmitteln und Reagenzien und zur Vergrößerung der Synthesezeit führt.

Das Vorhandensein eines Mischers im genannten Reaktor führt zum mechanischen Verschleiß des Trägers und zum Verstopfen des Filters, infolgedessen müssen der Reaktor zerlegt und das Filter ausgetauscht bzw. gereinigt werden.

Bekannt ist ein Reaktor zur Festphasensynthese von Biopolymeren, der eine Kammer mit einem unharten Polymerträger, welche ein Element zum Einbringen von Lösungsmitteln und Reagenzien in die Kammer und einen Rohrstutzen zum Ausbringen von Lösungsmitteln und Reagenzien aus der Kammer besitzt, und ein Filter, das in der Kammer in unmittelbarer Nähe der Zone zum Ausbringen von Lösungsmitteln und Reagenzien aus der Kammer angeordnet ist, enthält (Vega Biotechnologies, Inc., USA, Vega Coupler 250, Tucson, AZ 1983).

Bei dem genannten Reaktor zur Festphasensynthese von Biopolymeren hat die Kammer ein großes Reaktionsvolumen im Vergleich mit dem Volumen des unharten Polymerträgers,

- 2 -

was zu einer Verminderung der Leistung und der Qualität der zu gewinnenden Biopolymere, zum Mehrverbrauch an Lösungsmitteln und Reagenzien und zur Vergrößerung der Synthesezeit führt.

Die Kammer des besagten Reaktors ist an einer Rüttelvorrichtung befestigt, was zum mechanischen Verschleiß des Trägers und zum Verstopfen des Filters führt, infolgedessen müssen der Reaktor zerlegt und das Filter ausgetauscht bzw. gereinigt werden, d.h. die Synthese muß unterbrochen werden.

Offenbarung der Erfindung

Der vorliegenden Erfindung liegt die Aufgabe zugrunde, einen Reaktor zur Festphasensynthese von Biopolymeren zu schaffen, bei dem die Kammer so ausgebildet wäre, daß die Steigerung der Leistung, die Erhöhung der Qualität der zu gewinnenden Biopolymere, die Verminderung des Verbrauchs an Lösungsmitteln und Reagenzien und die Verkürzung der Synthesezeit sowie die Verhinderung des mechanischen Verschleißes des unharten Polymerträgers und die Vermeidung der Verstopfung des Filters gewährleistet werden, was seinerseits eine kontinuierliche Synthese ermöglicht.

Dies wird dadurch erreicht, daß beim Reaktor zur Festphasensynthese von Biopolymeren, der eine Kammer mit einem unharten Polymerträger, welche ein Element zum Einbringen von Lösungsmitteln und Reagenzien in die Kammer und einen Rohrstutzen zum Ausbringen von Lösungsmitteln und Reagenzien aus der Kammer besitzt, und ein Filter, das in der Kammer in unmittelbarer Nähe der Zone zum Ausbringen von Lösungen angeordnet ist, enthält, gemäß der Erfindung die Kammer für eine vollständige Ausfüllung ihres Reaktionsvolumens mit dem unharten Polymerträger vorgerichtet ist und ein weiteres Filter hat, das in der Kammer in unmittelbarer Nähe der Zone zum Einbringen von Lösungsmitteln und Reagenzien in die Kammer angeordnet ist.

Es ist zweckmäßig, zu einer vollständige Ausfüllung des Reaktionsvolumens der Kammer mit dem unharten Polymerträger in der Kammer einen Kolben mit Stange unterzubringen, deren Körper mit Kanälen zu versehen, die miteinander und mit dem Element zum Einbringen von Lösungsmitteln und

- 3 -

Reagenzien verbunden sind, und das Filter, das in der Kammer in unmittelbarer Nähe der Zone zum Einbringen von Lösungen und Reagenzien in die Kammer angeordnet ist, am Kolben anzubringen, so daß sein Kanal von dem unharten Polymerträger getrennt wird.

Der Kolben der Stange kann federbelastet sein.

Es ist wünschenswert, in dem Reaktor einen Antrieb vorzusehen, dessen Ausgangswelle kinematisch mit der Stange des Kolbens verbunden ist.

Eine solche konstruktive Ausführung des Reaktors zur Festphasensynthese von Biopolymeren gestattet es, das Reaktionsvolumen der Kammer mit dem Volumen des Trägers auszugleichen, was zur Steigerung der Leistung und zur Erhöhung der Qualität der zu gewinnenden Biopolymere dank einer Verringerung von Nebenprodukten der Synthese sowie zur Verminderung des Verbrauchs an Lösungen und Reagenzien und zur Verkürzung der Synthesezeit führt.

Kurze Beschreibung der Zeichnungen

Im folgenden wird die Erfindung an Hand von konkreten Ausführungsbeispielen und beiliegenden Zeichnungen näher erläutert. Es zeigt

Fig. 1 das Gesamtschema des Reaktors zur Festphasensynthese von Biopolymeren, gemäß der Erfindung (Längsschnitt);

Fig. 2 das Gesamtschema einer anderen Ausführungsform des Reaktors zur Festphasensynthese von Biopolymeren, gemäß der Erfindung (Längsschnitt der Kammer);

Fig. 3 dasselbe wie in Fig. 1 (Kolben in Betriebsstellung).

Beste Ausführungsformen der Erfindung

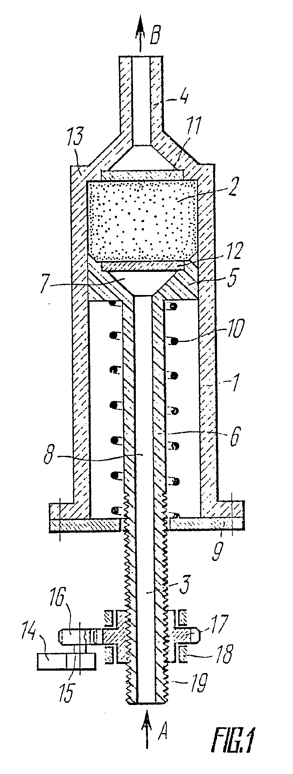

Der erfindungsgemäße Reaktor zur Festphasensynthese von Biopolymeren enthält eine zylindrische Kammer 1 (Fig. 1), die mit einem unharten Polymerträger 2 ausgefüllt ist und ein zum Einbringen von Lösungsmitteln und Reagenzien in die Kammer I in Richtung des Pfeiles A bestimmtes Element 3, das in Form eines Kanals ausgebildet ist, und einen Rohrstutzen 4 zum Ausbringen von Lösungsmitteln und Reagenzien aus der Kammer I in Richtung des Pfeiles B besitzt.

Als Träger 2 wird ein Kopolymer des Styrols B mit Divinylbenzol benutzt, als Lösungsmittel und Reagenzien werden

- 4 -

das Methylenchlorid bzw. die Trifluoressigsäure verwendet.

Die Kammer 1 ist für eine vollständige Ausfüllung ihres Reaktionsvolumens mit dem unharten Polymerträger 2 vorgerichtet. Zu diesem Zweck ist bei der beschriebenen Ausführungsform des erfindungsgemäßen Reaktors in der Kammer 1 ein Kolben 5 mit Stange 6 untergebracht, in deren Körper Kanäle 7 bzw. 8 ausgebildet sind, die miteinander und mit dem Element 3 verbunden sind. Die Stange 6 ist durch die Stirnseite 9 der Kammer 1 hindurchgeführt. Der Kolben 5 der Stange 6 ist mittels einer Feder 10 belastet.

In der Kammer 1, in der unmittelbaren Nahe der Zone zum Ausbringen von Lösungsmitteln und Reagenzien aus der Kammer 1 und der Zone zum Einbringen von Lösungen und Reagenzien in die Kammer 1 sind Filter 11 bzw. 12 angeordnet.

Bei der beschriebenen Ausführungsform des Reaktors gemäß der Erfindung ist das Filter 11 unmittelbar an der Stirnseite 13 der Kammer 1 am Eintritt in den Rohrstutzen 4 zum Ausbringen von Lösungsmitteln und Reagenzien aus der Kammer 1 angebracht, und das Filter 12 ist am Kolben 5 angebracht, indem es seinen Kanal 7 von dem unharten Polym. träger 2 trennt.

Der erfindungsgemäße Reaktor ist mit einem Geber 14 zur Veränderung des Volumens des unharten Polymerträgers 2 im Reaktionsvolumen der Kammer 1 ausgestattet, dessen Walze 15 mittels eines Ritzels 16, das in ein in Lagern 18 sitzendes Zahnrad 17 eingreift, und einer Gewindeverbindung 19 mit der Stange 6 des Kolbens 5 kinematisch verbunden ist.

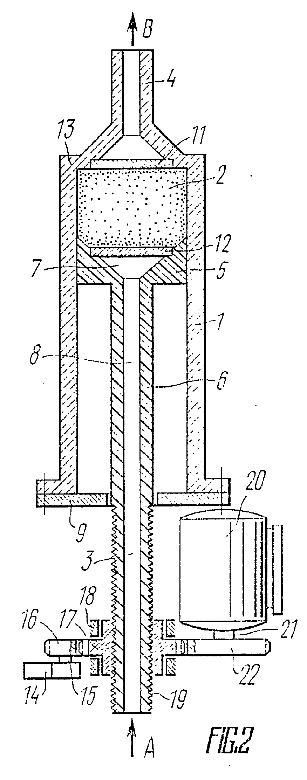

Nach einer anderen Ausführungsform des erfindungsgemäßen Reaktors zur Festphasensynthese von Biopolymeren ist im Reaktor ein Antrieb 20 (Fig. 2) vorgesehen, dessen Ausgangswelle 21 mittels eines Ritzels 22, das in das Zahnrad 17 eingreift, und der Gewindeverbindung 19 mit der Stange 6 des Kolbens 5 kinematisch verbunden ist.

Die Wirkungsweise des erfindungsgemäßen Reaktors zur Festphasensynthese von Biopolymeren ist wie folgt.

Man fördert die Lösungen und Reagenzien ununterbrochen durch das Element 3 (Fig. 1), die Kanäle 8 und 7 und das

- 5 -

Filter 12 in Richtung des Pfeils A in die Kammer 1 in einer vorgegebenen Reihenfolge. In der Kammer 1 kontaktieren die · Lösungsmittel und Reagenzien mit dem Träger 2, passieren ihn und treten durch das Filter 11 und den Rohrstutzen 4 in Richtung des Pfeiles B aus.

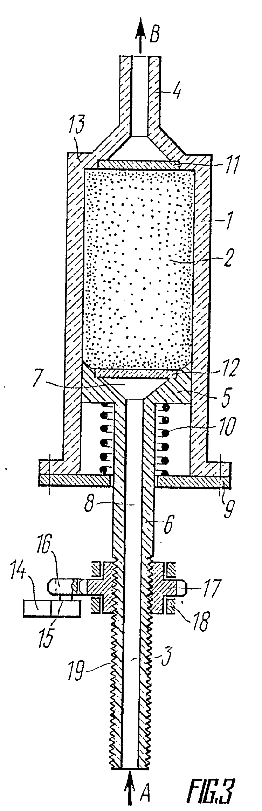

Bei der Wechselwirkung der Lösungsmittel und Reagenzien miteinander und mit dem Träger 2 erfolgt eine Festphasensynthese von Biopolymeren. In Abhängigkeit vom Stadium der Synthese verändert sich das Volumen des Trägers 2 - es vergrößert sich oder vermindert sich. Unter der Wirkung des sich verändernden - vergrößerten Volumens des Trägers 2 ändert der Kolben 5 seine Lage, wie es Fig. 3 zeigt.

Die Feder 10 (Fig. 1 und 3) gewährleistet einen ständigen Kontakt der Teilchen des Trägers 2 miteinander und mit der Oberfläche der Kammer 1, indem sie den Kolben 5 anpreßt.

Die Wirkungsweise des erfindungsgemäßen Reaktors zur Festphasensynthese von Biopolymeren nach Fig. 2 ist der Wirkungsweise des erfindungsgemäßen Reaktors zur Festphasensynthese von Biopolymeren nach Fig. 1 und 3 ähnlich.

Der Unterschied besteht in folgendem.

Bei Vergrößerung des Volumens des unharten Polymerträgers 2 (Fig. 2) übt dieser einen Druck auf den Kolben 5 der Stange 6 aus und verschiebt diese. Bei ihrer Bewegung überwindet die Stange 6 über die Gewindeverbindung 19 und die Ritzel 16 und 22 die Kraft des Antriebs 20. Ber Verkleinerung des Volumens des Trägers 2 wird dieser kompriert, und sein Druck auf den Kolben 5 wird aufgehoben. In derselben Zeit preßt der Antrieb 20 über die Ritzel 22 und 16 und die Gewindeverbindung 19 der Stange 6 den Kolben 5 an den Träger 2 an.

Der zum Patent angemeldete Reaktor zur Festphasensynthese von Biopolymeren gewährleistet eine Steigerung der Leistung und eine Erhöhung der Qualität der zu gewinnenden Biopolymere, eine Verminderung des Verbrauchs an Lösungen und Reagenzien und eine Verkürzung der Synthesezeit.

- 6 -

Gewerbliche Verwertbarkeit

Die Erfindung kann in der chemischen, biologischen und medizinischen Industrie angewendet werden.

- 7 -

PATENTANSPRUCHE:

I. Reaktor zur Festphasensynthese von Biopolymeren, der eine Kammer (I) mit einem unharten Polymerträger (2), welche ein Element (3) zum Einbringen von Lösungsmitteln und Reagenzien in die Kammer (I) und einen Rohrstutzen (4) zum Ausbringen von Lösungsmitteln und Reagenzien aus der Kammer (I) besitzt, und ein Filter (II), das in der Kammer (I) in unmittelbarer Nähe der Zone zum Ausbringen von Lösungsmitteln und Reagenzien aus der Kammer (I) angeordnet ist, enthält, dadurch g e k e n n z e i c h n e t, dass die Kammer (I) für eine vollständige Ausfüllung ihres Reaktionsvolumens mit dem unharten Polymerträger (2) vorgerichtet ist und ein weiteres Filter (I2) aufweist, das in der Kammer (I) in unmittelbarer Nähe der Zone zum Einbringen von Lösungsmitteln und Reagenzien in die Kammer (I) angeordnet ist.

2. Reaktor nach Anspruch 1, dadurch g e k e n n z e i c h n e t, daß zu einer vollständigen Ausfüllung des Reaktionsvolumens der Kammer (1) mit dem unharten Polymerträger (2) in der Kammer (1) ein Kolben (5) mit Stange (6) untergebracht ist, in deren Körper Kanäle (7, 8) ausgebildet sind, die miteinander und mit dem Element (3) zum Einbringen von Lösungsmitteln und Reagenzien in die Kammer (1) verbunden sind, während das Filter (12), das in der Kammer (1) in unmittelbarer Nahe der Zone zum Einbringen von Lösungsmitteln und Reagenzien in die Kammer (1) angeordnet ist, am Kolben (5) angebracht ist, wobei es seinen Kanal (7) von dem unharten Polymerträger (2) trennt.

3. Reaktor nach Anspruch 2, dadurch g e k e n n z e i c h n e t, daß der Kolben (5) der Stange (6) federbelastet ist.

4. Reaktor nach Anspruch 2, dadurch g e k e n n z e i c h n e t, daß er mit einem Antrieb versehen ist, dessen Ausgangswelle kinematisch mit der Stange (6) des Kolbens (5) verbunden ist.

EPAC-38914.0

FIG.1

EP 0 386 238 A1

EPAC-38914.0

FIG.2

EPAC-38914.0

FIG.3

# INTERNATIONAL SEARCH REPORT

International Application No PCT/SU 88/00142

**I. CLASSIFICATION OF SUBJECT MATTER** (if several classification symbols apply, indicate all) [6]

According to International Patent Classification (IPC) or to both National Classification and IPC

IPC[4]    B 01 J 19/18

**II. FIELDS SEARCHED**

Minimum Documentation Searched [7]

| Classification System | Classification Symbols |
|---|---|
| IPC[4] | B 01 J 19/18 |

Documentation Searched other than Minimum Documentation
to the Extent that such Documents are Included in the Fields Searched [8]

**III. DOCUMENTS CONSIDERED TO BE RELEVANT [9]**

| Category [*] | Citation of Document, [11] with Indication, where appropriate, of the relevant passages [12] | Relevant to Claim No. [13] |
|---|---|---|
| A | SU, A1, 507347 (Institut Khimicheskoi fiziki AN SSSR) 9 April 1976 (09.04.76) -- | 1,2 |
| A | SU, A1, 874167 (Tamborsky institut khimicheskogo mashinostroenia) 26 October 1981 (26.10.89) -- | 1,2 |
| A | SU, A1, 1189496 (Tamborsky institut khimicheskogo mashinostroenia) 7 November 1985 (07.11.85) -- | 1,2 |
| A | D.I. Ageikin et al. "Datchiki kontrolya i regulirovania", 1965, Machinostroenie, (Moscow) see pages 137-138 | 3 |

------------

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 10 March 1989 (10.03.89) | 3 April 1989 (03.04.89) |

| International Searching Authority | Signature of Authorized Officer |
|---|---|
| ISA/SU | |

Form PCT/ISA/210 (second sheet) (January 1985)